Europäisches Patentamt

European Patent Office

Office européen des brevets

(19)

(11) **EP 1 248 236 A2**

(12) ## EUROPÄISCHE PATENTANMELDUNG

(43) Veröffentlichungstag:
**09.10.2002 Patentblatt 2002/41**

(51) Int Cl.⁷: **G06T 11/00**

(21) Anmeldenummer: **02100333.0**

(22) Anmeldetag: **03.04.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **04.04.2001 DE 10116682**

(71) Anmelder:
- **Philips Corporate Intellectual Property GmbH 20099 Hamburg (DE)**
  Benannte Vertragsstaaten:
  **DE**
- **Koninklijke Philips Electronics N.V. 5621 BA Eindhoven (NL)**
  Benannte Vertragsstaaten:
  **FR GB NL**

(72) Erfinder: **Schomberg, Hermann**
**Weisshausstrasse 2, 52066 Aachen (DE)**

(74) Vertreter: **Volmer, Georg, Dipl.-Ing. et al**
**Philips Corporate Intellectual Property GmbH, Weisshausstrasse 2**
**52066 Aachen (DE)**

(54) **Verfahren und Vorrichtung zur Rekonstruktion dreidimensionaler Bilder aus Kegelstrahl-Projektionsdaten**

(57)    Die Erfindung betrifft ein Verfahren zur Rekonstruktion dreidimensionaler Bilder aus Kegelstrahl-Projektionsdaten eines in einem Untersuchungsbereich angeordneten Untersuchungsobjektes. In der Praxis sind Kegelstrahl-Projektionen in der Regel abgeschnitten, da es meist nicht möglich ist, das Untersuchungsobjekt vollständig in allen Abbildungspositionen abzubilden. Ein nur aus den erfassten Projektionsdaten rekonstruiertes Bild weist deshalb nicht die größtmögliche Bildqualität auf. Um die Projektionsdaten über die sensitive Detektorfläche hinaus fortzusetzen und Bilder mit höherer Bildqualität zu erhalten, wird deshalb erfindungsgemäß ein Verfahren mit den folgenden Schritten vorgeschlagen:

a) Erfassung der Kegelstrahl-Projektionsdaten mittels einer eine Röntgenquelle und einen Röntgendetektor aufweisenden Röntgeneinrichtung, wobei die Röntgenquelle zur Erfassung der Projektionsdaten entlang einer Trajektorie um den Untersuchungsbereich geführt wird,

b) Ermittlung der Kontur der sensitiven Detektorfläche des Röntgendetektors, auf der Projektionsdaten erfasst wurden,

c) Ermittlung von Pseudo-Projektionsdaten in einem gesamten, die sensitive Detektorfläche ringförmig umschließenden Außenbereich aus den ermittelten Projektionsdaten, und

d) Rekonstruktion eines dreidimensionalen Bildes des Untersuchungsbereiches aus den auf der sensitiven Detektorfläche erfassten Projektionsdaten und den im Außenbereich ermittelten Pseudo-Projektionsdaten.

EP 1 248 236 A2

FIG.4

**Beschreibung**

Die Erfindung betrifft ein Verfahren zur Rekonstruktion dreidimensionaler Bilder aus Kegelstrahl-Projektionsdaten eines in einem Untersuchungsbereich angeordneten Untersuchungsobjektes sowie eine entsprechende Röntgeneinrichtung.

Bei einer Röntgeneinrichtung, beispielsweise einem C-Bogensystem, wird grundsätzlich zur Bildgebung zunächst ein Satz von Kegelstrahl-Projektionsdaten des abzubildenden Teiles eines Untersuchungsobjektes gewonnen, aus dem dann anschließend die dreidimensionale Verteilung des Röntgenschwächungskoeffizienten innerhalb des abzubildenden Teiles des Untersuchungsobjektes rekonstruiert werden kann. Diese Verteilung dient dann als 3D-Bild dieses Teiles des Untersuchungsobjektes, des sogenannten Untersuchungsbereiches. Bei medizinischen Anwendungen ist das Untersuchungsobjekt zumeist ein menschlicher Körper. Der für die Projektion verwendete Kegelstrahl wird von einer nahezu punktförmigen Röntgenquelle (der Spitze des Kegels) und der möglicherweise durch Blenden verkleinerten sensitiven Fläche des Röntgendetektors (der Grundfläche des Kegels) gebildet. Der Untersuchungsbereich des Untersuchungsobjektes befindet sich dann zwischen Röntgenquelle und Röntgendetektor. Bei einem häufig verwendeten isozentrischen C-Bogensystem sind Röntgenquelle und Röntgendetektor im Wesentlichen starr miteinander verbunden, wobei die Verbindungslinie zwischen der Röntgenquelle und dem Mittelpunkt des Röntgendetektors stets mehr oder weniger genau durch das Isozentrum geht.

Die Position der Röntgenquelle und damit die Orientierung des Kegelstrahles kann innerhalb gewisser bauartbedingter Grenzen frei gewählt werden. Zur Gewinnung eines Satzes von Kegelstrahl-Projektionsdaten wird die Röntgenquelle längs einer vorgegebenen Trajektorie um den abzubildenden Untersuchungsbereich herum geführt, wobei in kurzen zeitlichen bzw. räumlichen Abständen eine Kegelstrahl-Projektion nach der anderen gemessen wird. Die Trajektorie liegt bauartbedingt zumindest näherungsweise auf der Oberfläche einer Kugel, deren Mittelpunkt das Isozentrum des C-Bogensystems ist.

Es gibt bei einem derartigen C-Bogensystem bei vorgegebener Trajektorie ein kugelförmiges Volumen mit folgenden drei Eigenschaften: Der Mittelpunkt des kugelförmigen Volumens ist das Isozentrum; das kugelförmige Volumen wird von allen Kegelstrahlen überdeckt, deren Spitze auf der Trajektorie liegt; das kugelförmige Volumen ist die größte Kugel mit den beiden erstgenannten Eigenschaften. Der Durchmesser dieser Kugel hängt nur wenig von der Wahl der Trajektorie, aber stark von der Größe des Detektors und einigen anderen geometrischen Parametern ab. In der Praxis liegt der Durchmesser zwischen 20 und 30 cm. Da ein menschlicher Körper nicht in eine derart kleine Kugel hineinpasst, sind die Kegelstrahl-Projektionen notwendigerweise abgeschnitten, das heißt, der Kegelstrahl überdeckt nicht den gesamten Körper.

Ist die Trajektorie geeignet gewählt, so schneidet jede Ebene, die die Kugel schneidet, auch die Trajektorie. Eine solche Trajektorie mit dieser Eigsnschart wird häufig auch als vollständig bezüglich dieser Kugel bezeichnet. Geeignet konstruierte C-Bogensysteme können Trajektorien realisieren, die vollständig bezüglich der Kugel sind Sofern die Trajektorie also vollständig bezüglich der Kugel wäre und die Projektionen nicht abgeschnitten wären, wäre das Bild des in der Kugel befindlichen Teiles des Untersuchungsobjektes eindeutig durch alle Kegelstrahl-Projektionen entlang der Trajektorie bestimmt. Mittels eines geeigneten Rekonslruktionsalgorithmus ließe sich dann das unter diesen Bedingungen bestimmte Bild innerhalb der Kugel zuverlässig und genau rekonstruieren Ein solcher Rekonstruktionsalgorithmus wird z. B. in dem Artikel "A cone-beam reconstruction algorithm using shift-variant filtering and cone-beam back projection", Defrise, M. and Clack, R., IEEE transactions on medical imaging, vol. 13 no. 1: 186-195, March 1994, angegeben.

Zwar ist es in der Praxis möglich, die Trajektorie so auszugestalten, dass die Vollständigkeitsbedingung erfüllt ist. Die Eigenschaft der Kegelstrahl-Projektionen, abgeschnitten zu sein, ist jedoch zumindest bei den meisten Anwendungen unvermeidlich. Dies führt dazu, dass das Bild des innerhalb der Kugel befindlichen Teiles des Untersuchungsobjektes nicht mehr eindeutig bestimmt werden kann, selbst wenn die Trajektorie vollständig ist. Das wahre Bild kann vielmehr aufgefasst werden als die Summe zweier Bilder, von denen das erste durch die gemessenen Anteile der Kegelstrahl-Projektionen eindeutig bestimmt und auch berechenbar ist. Das zweite Bild wäre zwar durch die abgsschnittenen Anteile der Kegelstrahl-Projektionen eindeutig bestimmt, kann aber nicht berechnet werden, weil genau diese Anteile der Kegelstrahl-Projektionen fehlen.

Aus der US 5,640,436 ist ein Verfahren zur Fortsetzung abgeschnittener Kegelstrahl-Projektionen bei der Computertomographie bekannt. Die Trajektorie ist dabei eine Kreisbahn. Bei diesem Verfahren wird vorgeschlagen, die Kegelstrahl-Projektionsdaten über den Randbereich hinaus parallel zur Ebene der Kreisbahn in einen Außenbereich hinein fortzusetzen, um dann aus den fortgesetzten Projektionen Bilder zu rekonstruieren, wobei während der Rekonstruktion eine eindimensionale Filterung entlang der fortgesetzten Linien erfolgt.

Die eindimensionale Fortsetzung kann z. B. mit einem Verfahren geschehen, das in dem Artikel "Processing of incomplete measurement data in computer tomography", R.M. Lewitt, Medical Physics, 6 (5): 412-417, 1979 beschrieben wird.

Der vorliegenden Erfindung liegt die Aufgabe zugrunde, ein Rekonstruktionsverfahren der eingangs genannten Art anzugeben, mit dem auch aus abgeschnittenen Kegelstrahl-Projektionsdaten dreidimensionale Bilder des gewünschten Untersuchungsbereiches mit hoher Bildqualität erstellt werden können. Diese Aufgabe wird durch ein Rekonstruktionsverfahren der eingangs genannten Art mit den folgenden Schritten gelöst:

a) Erfassung der Kegelstrahl-Projektionsdaten mittels einer eine Röntgenquelle und einen Röntgendetektor aufweisenden Röntgeneinrichtung, wobei die Röntgenquelle zur Erfassung der Projektionsdaten entlang einer Trajektorie um den Untersuchungsbereich geführt wird,
b) Ermittlung der Kontur der sensitiven Detektorfläche des Röntgendetektors, auf der Projektionsdaten erfasst wurden,
c) Ermittlung von Pseudo-Projektionsdaten in einem gesamten, die sensitive Detektorfläche ringförmig umschließenden Außenbereich aus den ermittelten Projektionsdaten, und
d) Rekonstruktion eines dreidimensionalen Bildes des Untersuchungsbereiches aus den auf der sensitiven Detektorfläche erfassten Projektionsdaten und den im Außenbereich ermittelten Pseudo-Projektionsdaten.

Dem erfindungsgemäßen Verfahren liegt die Erkenntnis zugrunde, dass das oben beschriebene zweite Bild, das durch die abgeschnittenen Anteile der Kegelstrahl-Projektionen bestimmt wäre, im Inneren des durch alle Kegelstrahl-Projektionen bestimmten kugelförmigen Volumens relativ glatt verläuft und nur wenig variiert. In der Nähe des Randes des kugelförmigen Bereiches kann es allerdings stärker variieren. Schon eine grobe Schätzung der abgeschnittenen Anteile der Kegelstrahl-Projektionen würde genügen, um eine brauchbare Näherung dieses zweiten Bildes innerhalb des kugelförmigen Volumens berechnen zu können.
Die vorliegende Erfindung macht sich diese Erkenntnisse zu Nutze und schlägt deshalb vor, in einem ersten Schritt die abgsschnittenen auf der sensitiven Detektorfläche erfassten Kegelstrahl-Projektionen so zu ergänzen, dass sie näherungsweise als nicht abgeschnittene Projektionen eines gedachten Untersuchungsobjektes aufgefasst werden können, der in einem größeren kugelförmigen Volumen vollständig enthalten ist. Zur Fortsetzung der abgsschnittenen Projektionen sollen also Pseudo-Projektionsdaten in einem Außenbereich ermittelt werden, wobei der Außenbereich vollständig und vorzugsweise möglichst gleichmäßig ausgefüllt wird. Das größere kugelförmige Volumen wird dabei deutlich größer gewählt als das erstgenannte kleinere kugelförmige Volumen, der sogenannte Innenbereich, ist aber bevorzugt um den gleichen Mittelpunkt angeordnet. Das gedachte Untersuchungsobjekt entsteht aus dem tatsächlichen Untersuchungsobjekt durch Weglassen aller außerhalb des größeren kugelförmigen Volumens befindlichen Teile. Weiter wird erfindungsgemäß vorgeschlagen, in einem zweiten Schritt das gewünschte Bild des innerhalb des kleineren kugelförmigen Volumens befindlichen Teiles des Untersuchungsobjektes aus den im ersten Schritt gewonnenen ergänzten Kegelstrahl-Projektionen, also aus den innerhalb des kleineren kugelförmigen Volumens erfassten Kegelstrahl-Projektionsdaten und den im sogenannten Außenbereich, also dem Differenzvolumen zwischen dem größeren und dem kleineren kugelförmigen Volumen, ermittelten Pseudo-Projektionsdaten, zu rekonstruieren.
Als Rekonstruktionsalgorithmus kommt z.B. wieder der in dem Artikel von Defrise und Clack beschriebene Algorithmus in Frage.
Ein mit dem erfindungsgemäßen Verfahren rekonstruiertes dreidimensionales Bild unterscheidet sich von dem wahren Bild des in dem kleineren kugelförmigen Volumen, also in dem Innenbereich, befindlichen Teil des Untersuchungsobjektes lediglich durch ein zwar unbekanntes, aber sehr schwaches, glattes und beinahe konstantes Bild, das auch in der Nähe des Randes des Innenbereiches verhältnismäßig wenig variiert. Das rekonstruierte Bild erlaubt daher die Erkennung feiner anatomischer Details, liefert allerdings keine absoluten Zahlenwerte des Röntgenschwächungskoeffizienten. Zeigt das Bild ein Organ, dessen Schwächungskoeffizient bekannt ist, kann das Bild durch Addition einer geeigneten Konstanten jedoch nachträglich normiert werden.
Das erfindungsgemäße Verfahren ist auch dann anwendbar, wenn die Trajektorie bezüglich keiner Kugel vollständig ist, was etwa der Fall ist, wenn die Trajektorie aus einem Kreis oder einem Teil eines Kreises besteht. Als Rekonstruktionsalgorithmus kann stets die sogenannte algebraische Rekonstruktionstechnik verwendet werden, im Falle eines (Teil-)Kreises auch der bekannte Algorithmus von Feldkamp, Davis und Kress. In der Regel wird das rekonstruierte Bild in einem solchen Fall zusätzliche Artefakte aufweisen, die durch die Verletzung der Vollständigkeitsbedingung zustande kommen. Die Rekonstruktion kann im übrigen auch auf ein Teilvolumen des Innenbereichs beschränkt werden.
Vorteilhafterweise wird der Außenbereich derart gewählt, dass zumindest ein wesentlicher Teil einer jeden von einembeliebigen Punkt der Trajektorie ausgehenden Kegelstrahl-Projektion des Untersuchungsobjektes von ihm umfasst wird.
In einer weiteren Ausgestaltung des erfindungsgemäßen Verfahrens werden nur die erfassten Rand-Projektionsdaten, also die im Randbereich der sensitiven Detektorfläche erfassten Projektionsdaten verwendet, um die Pseudo-Projektionsdaten im Außenbereich zu ermitteln. Bevorzugt ist außerdem, Pseudo-Projektionsdaten nur anhand von unmittelbar benachbarten Rand-Projektionsdaten zu ermitteln.
Bei der Ermittlung der Pseudo-Projektionsdaten, also der Fortsetzung der abgeschnittenen Kegelstrahl-Projektionen, wird eine mehr oder weniger genaue Schätzung der Gestalt des Untersuchungsobjektes benutzt. Vorteilhaft ist es jedoch, a priori Informationen über die Gestalt des Untersuchungsobjektes auszunutzen. Eine relativ genaue Schätzung kann beispielsweise mit Hilfe zusätzlicher Sensoren, z.B. taktiler oder optischer Sensoren oder Ultraschallsensoren, gewonnen werden.

Während bei dem aus der US 5,640,436 vorgeschlagenen Verfahren die Fortsetzung der Kegelstrahl-Projektionen entlang paralleler, parallel zu der als kreisförmig unterstellten Trajektorie verlaufender Linie erfolgt, wird gemäß der erfindungsgemäßen Ausgestaltung nach Anspruch 5 vorgeschlagen, die Kegelstrahl-Projektionen entlang gerader radialer Linien fortzusetzen, deren jeweiliger Ausgangspunkt im oder nahe beim Mittelpunkt der sensitiven Detektorfläche liegt, die sich also dort schneiden. Damit wird einerseits die gewünschte vollständige Ausfüllung des Außenbereiches mit Pseudo-Projektionsdaten erreicht. Andererseits lassen sich dann auch andere Rekonstruktionsverfahren als das in der US 5,640,436 zwingend erforderliche Rekonstruktionsverfahren anwenden, um dreidimensionale Bilder zu erstellen. Insgesamt lässt sich somit eine deutlich bessere Auflösung der Bilder erreichen.

Bei den bekannten Röntgendetektoren liegen die gemessenen Projektionsdaten auf Gitterpunkten eines kartesischen Koordinatensystems oder, beispielsweise bei einem Bildverstärker, eines verzerrten kartesischen Koordinatensystems vor. Um die Fortsetzung der Kegelstrahl-Projektionen entlang radialer Linien vorzunehmen, ist es deshalb vorteilhaft, zunächst die ermittelten Projektionsdaten in einem Polarkoordinatensystem zu bestimmen, beispielsweise die in kartesischen Koordinaten vorliegenden Projektionsdaten durch lineare Interpolation in Polarkoordinaten umzuwandeln. Die Pseudo-Projektionsdaten können dann in Polarkoordinaten bestimmt und anschließend in das kartesische Koordinatensystem der im Innenbereich vorliegenden Projektionsdaten umgewandelt werden, beispielsweise durch lineare Interpolation in Winkelrichtung zwischen Pseudo-Projektionsdaten benachbarter Linien.

Zur Berechnung der Pseudo-Projektionsdaten können unterschiedliche Ansätze verfolgt werden. Eine Möglichkeit besteht darin, den radialen Werteverlauf der Projektionsdaten im Wesentlichen glatt in den Außenbereich hinein fortzusetzen und innerhalb des Außenbereichs auf 0 abfallen zu lassen. Hierfür können elliptische Kurven oder auch andere einfache Fortsetzungen gewählt werden, was bereits eine Verbesserung der Bildqualität mit sich bringt. Es kann jedoch auch vorgesehen sein, Pseudo-Projektionsdaten entlang jeder radialen Linie gemäß einer komplizierteren Formel zu bestimmen, beispielsweise nach dem in Anspruch 10 angsgsbenen Ansatz eines Polynoms ersten Grades, wobei mehrere Parameter verwendet werden, wie z.B. die Breite des Randbereiches, aus dem Rand-Projektionsdaten verwendet werden, und die Länge des Untersuchungsobjektes entlang der entsprechenden radialen Linie, die innerhalb des Umrisses des größeren kugelförmigen Volumens liegt. Damit lässt sich eine verhältnismäßig gute Fortsetzung der Kegelstrahl-Projektionen entlang der einzelnen radialen Linien erreichen, was letztendlich zu einer hohen Bildqualität führt.

Weitere vorteilhafte Ausgestaltungen ergeben sich auch aus den angegebenen Unteransprüchen. Die Erfindung betrifft außerdem auch eine Röntgeneinrichtung, wie sie in Anspruch 11 angegeben ist. In der Praxis wird eine solche Röntgeneinrichtung bevorzugt realisiert durch ein C-Bogensystem oder eine sogenannte Gantry aufweisende Computertomographie-Einrichtung. Es sei an dieser Stelle erwähnt, dass die erfindungsgemäße Röntgeneinrichtung in gleicher oder ähnlicher Weise weitergebildet sein kann wie das beschriebene erfindungsgemäße Verfahren.

Die Erfindung wird nachfolgend anhand der Zeichnungen näher erläutert. Es zeigen:

Figur 1            eine praktische Ausgestaltung einer erfindungsgemäßen Röntgeneinrichtung,

Figur 2            eine Darstellung der Abbildungsgeometrie zur Erläuterung des erfindungsgemäßen Verfahrens,

Figur 3            ein Flussdiagramm zur Erläuterung einer Ausführungsform des erfindungsgemäßen Verfahrens,

Figur 4            den Werteverlauf von Projektionsdaten sowie deren Fortsetzung nach dem erfindungsgemäßen Verfahren und

Figuren 5a, 5b     eine vergrößerte Darstellung von Projektionsdaten und deren Fortsetzung.

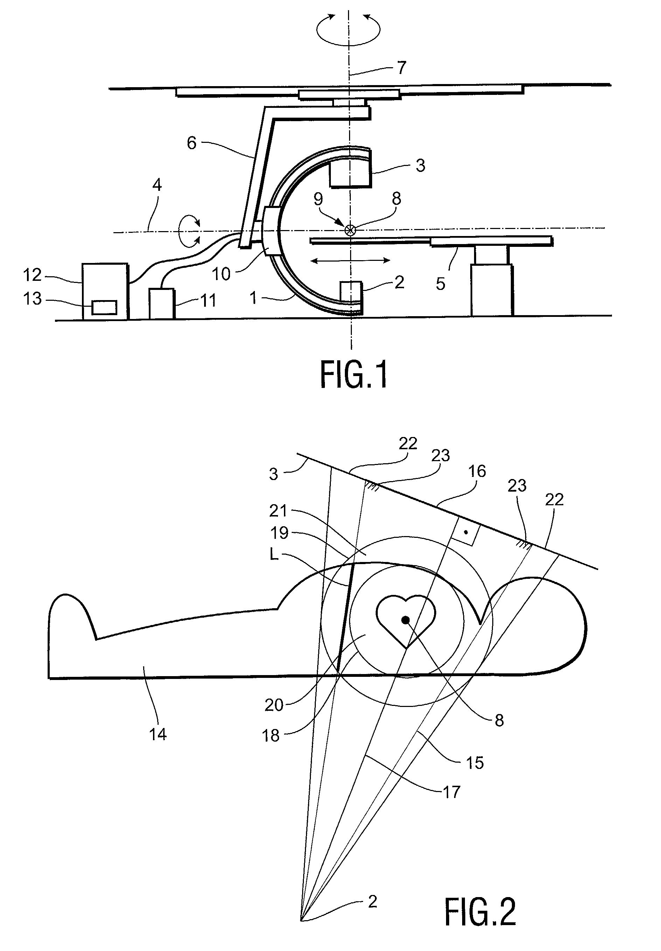

Figur 1 zeigt eine als C-Bogensystem ausgestaltete Röntgeneinrichtung gemäß der vorliegenden Erfindung. Dabei sind an einander gegenüberliegenden Seiten des C-Arms 1 eine Röntgenquelle 2 und ein Röntgendetektor 3 angeordnet. Der C-Arm 1 ist um eine Propellerachse 4 und eine C-Arm-Achse 9 mittels einer C-Arm-Halterung 10 rotierbar gelagert. Die C-Arm-Achse 9 ist in der vorliegenden Darstellung senkrecht zur Zeichenebene orientiert und geht durch ein Isozentrum 8. Der C-Arm 1 ist mittels eines L-Arms 6 um eine L-Arm-Achse 7 drehbar gelagert. Zur Steuerung der Röntgeneinrichtung ist eine Steuereinheit 11 vorgesehen. Zur Verarbeitung der erfassten Projektionsdaten entsprechend dem erfindungsgemäßen Verfahren, insbesondere zur Ermittlung von Pseudo-Projektionsdaten und zur Rekonstruktion gewünschter dreidimensionaler Bilder, ist außerdem eine Recheneinheit 12 mit einer Rekonstruktionseinheit 13 vorgesehen.

Die Röntgenquelle 2 und der Röntgendetektor 3 können um die C-Armachse 9 rotiert werden, während gleichzeitig die C-Arm-Halterung 10 mit dem C-Arm 1 um die Propellerachse 4 gedreht wird und Projektionsdaten eines (nicht gezeigten) Untersuchungsobjektes, beispielsweise eines auf einem in horizontaler Richtung verfahrbaren Patitententisch 5 liegenden Patienten, erfasst werden. Die beiden Antriebsbewegungen erfolgen vorzugsweise motorisch und gesteuert, wodurch die Röntgenquelle 2 entlang einer vorgegebenen Bahn, einer sogenannten Trajektorie, um das Untersuchungsobjekt bewegt werden kann. Beispielhafte Trajektorien zur Erfassung von Projektionsdaten sind zwei vollständige, zueinander gekippt angeordnete Voll- oder Halbkreise, eine helixförmige Kurve um die Propellerachse 4 oder auch ein verbogener Kreis um die Propellerachse 4. Eine Vielzahl anderer Trajektorien ist jedoch ebenfalls möglich und denkbar.

In Figur 2 ist die Abbildungsgeometrie skizziert, anhand derer das erfindungsgemäße Verfahren näher erläutert werden soll. Gezeigt ist ein Schnittbild, wobei die Schnittebene das Isozentrum 8 und das Lot 17 von der Röntgenquelle 2 auf die Detektorebene 3 enthält. Weiter ist ein kegelförmiges Strahlenbündel 15 gezeigt, das durch einen Teil des Patienten 14 hindurchtritt und Projektionsdaten auf der sensitiven Detektorfläche 16, also den Bereich des Detektors, der aktiv ist zur Erfassung von Projektionsdaten und nicht beispielsweise durch Blenden abgedeckt ist, liefert. Wie weiter zu erkennen ist, geht das Lot 17 von der Röntgenquelle 2 auf die Detektorebene 3 nicht genau durch das Isozentrum 8, sondern führt knapp daneben vorbei. Dies entspricht dem praktisch realistischen Fall bei Verwendung beispielsweise einer C-Bogen-Röntgeneinrichtung, die je nach Stellung des C-Bogens unterschiedliche mechanische Ungenauigkeiten aufweist. Idealerweise würde das Lot 17 jedoch durch das Isozentrum 8 führen.

Mit 18 ist ein kugelförmiger Innenbereich um das Isozentrum 8 bezeichnet, der dem oben beschriebenen inneren kugelförmigen Bereich entspricht, der also bei jeder Abbildungsposition entlang der vorgegebenen Trajektorie vollständig innerhalb des kegelförmigen Röntgenstrahlenbündels 15 liegt und von dem in jeder Abbildungsposition Projektionsdaten auf der sensitiven Detektorfläche 16 erfasst werden. Mit 19 ist ein weiterer kugelförmiger Bereich bezeichnet, der ebenfalls um das Isozentrum 8 und außerdem um den kleineren kugelförmigen Bereich 18 orientiert ist, dessen Radius also größer ist als der Radius der Kugel 18 aber kleiner als der kleinste Abstand zwischen dem Isozentrum 8 und der Detektorebene 3. Der Radius der Kugel 19 wird außerdem bevorzugt so groß gewählt, dass der Querschnitt des Körpers des Patienten 14 in der Ebene senkrecht zur Zeichenebene möglichst vollständig in die Kugel 19 hineinpasst.

Zwischen der Hülle der kleineren Kugel 18, die einen Innenbereich 20 umschließt, und der Hülle der größeren Kugel 19 wird somit ein Außenbereich 21 definiert, aus dem nicht in jeder Abbildungsposition entlang der Trajektorie Projektionsdaten erfasst werden. Vielmehr werden von dem Außenbereich 21 nur in manchen Abbildungspositionen, und dann zumeist auch nur aus Teilbereichen des Außenbereichs 21 Projektionsdaten erfasst. Mit dem erfindungsgemäß vorgeschlagenen Verfahren sollen somit in diesem Außenbereich 21 die abgeschnittenen Projektionen fortgesetzt werden, indem in dem Außenbereich 21 sogenannte Pseudo-Projektionsdaten rechnerisch ermittelt werden, um dann aus den erfassten Projektionsdaten des Innenbereichs 20 und den ermittelten Pseudo-Projektionsdaten des Außenbereichs 21 gewünschte Bilder des Untersuchungsbereiches zu rekonstruieren. Wie bereits erwähnt, werden derart erstellte Bilder eine deutlich erhöhte Auflösung zeigen gegenüber Bildern, die nur anhand der aus dem Innenbereich 20 erfassten Projektionsdaten rekonstruiert werden. Zwar sind auch bei der gezeigten Wahl der Größe der Kugel 19 nicht alle Teile des Untersuchungsobjektes, nämlich des Patienten 14, innerhalb dieser Kugel 19 angeordnet, was eigentlich gemäß der eingangs beschriebenen Forderung das Ziel wäre. Es lässt sich jedoch zeigen, dass der Einfluss von Bereichen des Untersuchungsobjektes, die weiter entfernt von dem eigentlichen Untersuchungsbereich sind, also weiter von der kleineren Kugel 18, mit zunehmenden Abstand auch geringer wird. Es ist deshalb ausreichend, in einem Außenbereich 21 einer gewissen Größe, die den oben beschriebenen Forderungen genügt, die Pseudo-Projektionsdaten zu ermitteln, gegebenenfalls auch zu schätzen, was schon eine Verbesserung der Bildqualität von Bildern der im Inneren der Kugel 18 liegenden Bereiche bewirkt.

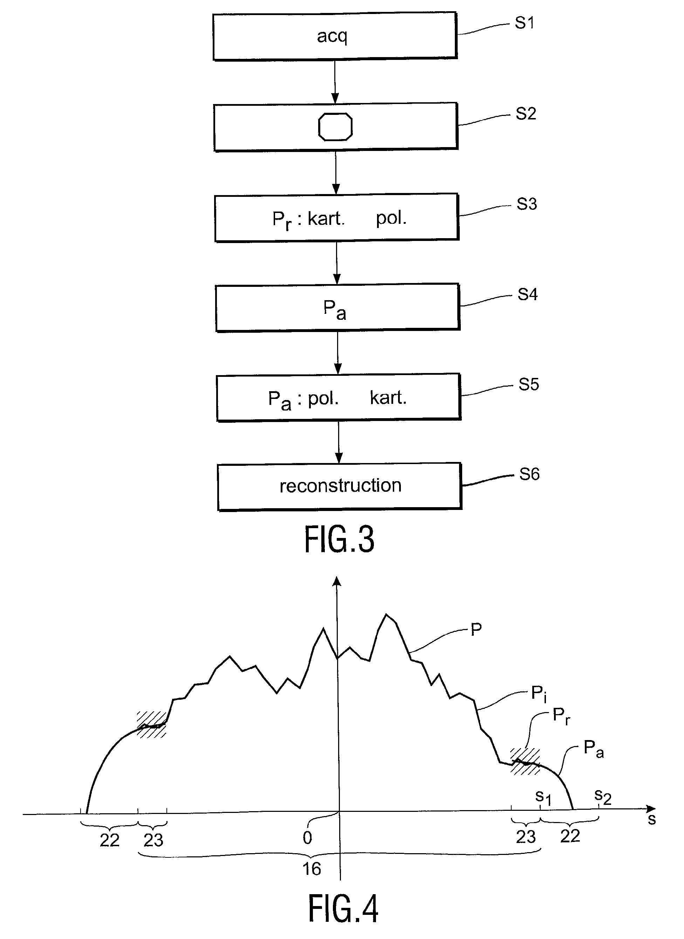

In Figur 3 sind die wesentlichen Verfahrensschritte des erfindungsgemäßen Verfahrens symbolisch in einem Ablaufdiagramm dargestellt. Zunächst erfolgt in einem ersten Verfahrensschritt S1 die Erfassung von Projektionsdaten aus dem Untersuchungsbereich. Die Röntgenquelle 2 fährt dabei entlang einer vorgegebenen Trajektorie um das Untersuchungsobjekt 14 herum und es werden in zeitlichen bzw. räumlichen Abständen von der sensitiven Detektorfläche 16 Projektionsdaten in bekannter Weise erfasst. Da die sensitive Detektorfläche nicht zwingend der vollständigen Detektorfläche gleichzusetzen ist, da beispielsweise die Ränder des Detektors durch Blenden abgedeckt sein können, so dass sich beispielsweise eine etwa quadratische sensitive Detektorfläche ergibt, wird in einem zweiten Verfahrensschritt S2 die Kontur der sensitiven Detektorfläche 16, mit der Projektionsdaten erfasst wurden, bestimmt.

Die Projektionsdaten liegen im Allganeinen an Positionen eines möglicherweise leicht verzerrten kartesischen Koordinatensystems vor. Da die Pseudo-Projektionsdaten für den Außenbereich 21 bevorzugt durch eine Fortsetzung entlang radialer Linien aus den erfassten Projektionsdaten erfolgen soll, wird zunächst in einem weiteren Schritt S3 eine Umwandlung der erfassten Projektionsdaten von kartesischen Koordinaten in Polarkoordinaten vorgenommen, das heißt, die an Positionen eines kartesischen Koordinatensystems vorliegenden Projektionsdaten werden umgerechnet in Projektionsdaten an Positionen eines Polarkoordinatensystems, dessen Ursprung bevorzugt der Mittelpunkt der sensitiven Detektorfläche 16 bildet. Die Umwandlung kann dabei beispielsweise durch bilineare Interpolation vorgenommen werden.

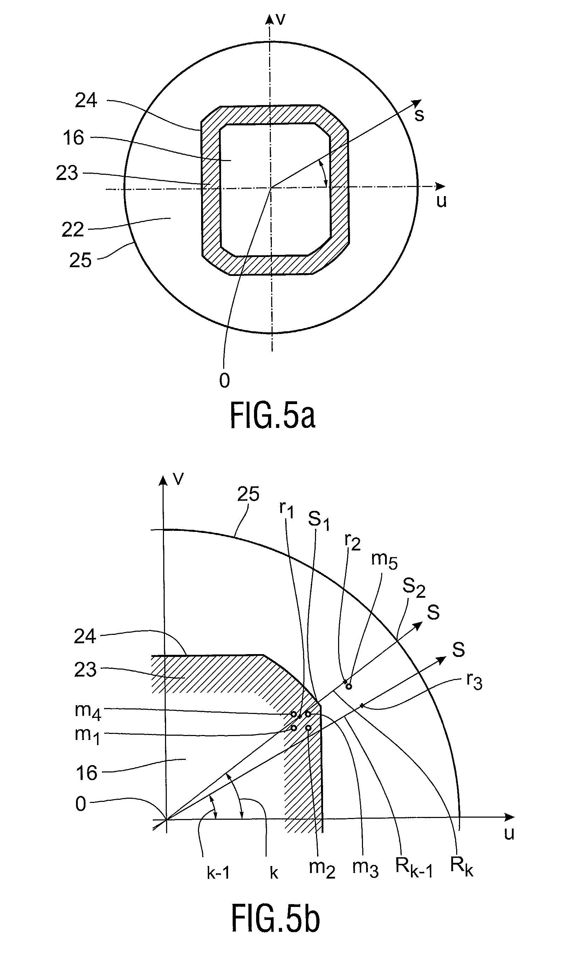

Anhand der nun in Polarkoordinaten vorliegenden Projektionsdaten werden nun im nachfolgenden Schritt S4 die Pseudo-Projektionsdaten ermittelt. Dies soll anhand der Figuren 4 und 5 näher erläutert werden. In Figur 4 ist beispielhaft der Verlauf von Projektionsdatenwerten P entlang einer einzelnen Linie quer über die sensitive Detektorfläche 16 gezeigt. Der Verlauf der Projektionsdatenwerte P kann dabei beispielsweise als Verlauf entlang einer radialen Linie durch den Mittelpunkt des Detektors in Polarkoordinaten verstanden werden, nachdem erfindungsgemäß die erfassten Projektionsdaten $P_i$, die nach Datenerfassung nur in dem Bereich 16 vorliegen, um Pseudo-Projektionsdaten $P_a$ im Außenbereich 22 zwischen den Punkten s1 und s2 ergänzt wurden. Anhand des Verlaufes P in Figur 4 ist also auch erkennbar, dass die gemessenen Projektionen - gemessen wurden nämlich nur die Projektionsdatenwerte $P_i$ im Bereich 16 - abgeschnitten sind und erfindungsgemäß derart um Pseudo-Projektionsdatenwerte $P_a$ ergänzt werden, dass der Verlauf der Projektionsdatenwerte innerhalb des Außenbereichs 22 bis auf null abfällt.

Der Außenbereich 22 in Figur 4 entspricht dabei der Projektion des in Figur 2 gezeigten Außenbereichs 21 auf die Detektorebene 3. Weiter ist als Parameter der Ort s angegeben, der den Ort entlang der Linie quer über den Detektor angibt.

Bevorzugt werden erfindungsgemäß zur Bestimmung der Pseudo-Projektionsdaten $P_a$ nur die sogenannten Rand-Projektionsdaten $P_r$ aus einem Randbereich 23 verwendet, das heißt also eine Teilmengs der gemessenen Projektionsdaten $P_i$, die entlang derselben Linie am Rande der sensitiven Detektorfläche 16 gemessen wurden. Dies soll anhand von Figur 5 näher erläutert werden.

In Figur 5a ist eine Draufsicht auf die Detektorebene 3 gezeigt. Dabei definiert die durch die Umrandung 24 begrenzte Fläche 16 die sensitive Detektorfläche, auf der Projektionsdaten erfasst werden. Gestrichelt gekennzeichnet ist dabei der Randbereich 23 der sensitiven Detektorfläche 16, aus dem Projektionsdaten bevorzugt verwendet werden, um die Pseudo-Projektionsdaten im Außenbereich 22 zu bestimmen. Der Außenbereich 22 ist begrenzt durch die Umrisslinie 25, die eine Projektion der in Figur 2 gezeigten größeren Kugel 19 auf die Detektorebene darstellt. An dieser Stelle sei darauf hingewiesen, dass die Umrisslinie 25 nicht zwangsläufig ein Kreis ist, wie in Figur 5a gezeigt, sondern wesentlich von der Wahl des Volumens 19 sowie der jeweiligen Abbildungsgeometrie abhängt. Bei der in Figur 2 gezeigten Abbildungsgeometrie und einem kugelförmigen Volumen 19 ergäbe sich dessen Projektion auf die dort gezeigte Detektorebene 3 als Ellipse. Der Einfachheit halber soll jedoch nachfolgend das Verfahren anhand eines kreisförmigen Umrisses 25 erläutert werden.

Der rechteckigförmige Umriss 24 mit abgeschnittenen Ecken kommt dadurch zustande, dass der Kegelstrahl durch entsprechende Blenden auf diesen Detektorbereich begrenzt ist. In Figur 5a sind weiter kartesische Koordinaten u, v sowie Polarkoordinaten s, μ gezeigt, die für die weitere Erläuterung des Verfahrens von Bedeutung sind.

In Figur 5b ist ein Ausschnitt der in Figur 5a gezeigten Projektionsfläche dargestellt. Dort sind zwei radiale Linien $R_k$, $R_{k-1}$ gezeigt, die ausgehend vom Ursprung O, der dem Mittelpunkt der sensitiven Detektorfläche 16 entspricht oder nahe bei diesem Mittelpunkt liegt, unter unterschiedlichen Winkeln $\mu_k$, $\mu_{k-1}$ nach außen verlaufen. Entlang dieser radialen Linien sollen die auf der sensitiven Detektorfläche 16 erfassten Projektionsdaten fortgesetzt werden. Wie bereits weiter oben erläutert wurde, liegen die erfassten Projektionsdaten an Punkten eines kartesischen Koordinatensystems vor, was mit der besonderen Ausgestaltung der bekannten Röntgendetektoren zu tun hat. Punkte eines solchen kartesischen Koordinatensystems sind in Figur 5b mit m1, m2, m3, m4 bezeichnet. Um die Fortsetzung entlang einer radialen Linie vornehmen zu können, werden bevorzugt zunächst die in kartesischen Koordinaten vorliegenden Projektionsdaten $P_i$ in Projektionsdaten auf Polarkoordinaten umgewandelt, das heißt, aus den an den Stellen m1 bis m4 vorliegenden Projektionsdaten wird beispielsweise an dem Punkt r1 auf der radialen Linie $R_k$ ein Projektionsdatenwert ermittelt. Da erfindungsgemäß bevorzugt nur die im Randbereich 23 erfassten Rand-Projektionsdaten $P_r$ zur Berechnung der Pseudo-Projektionsdaten ausgewertet werden sollen, werden somit mehrere, beispielsweise 5, Projektionsdatenwerte auf der radialen Linie $R_k$ im Bereich zwischen s1 und s2 durch Umwandlung aus an kartesischen Koordinatenpunkten gemessenen Projektionsdaten ermittelt. Bevorzugt wird dabei ein Projektionsdatenwert aus den jeweils benachbarten gemessenen Projektionsdatenwerten durch bilineare Interpolation ermittelt.

Aus den derart in Polarkoordinaten bestimmten Projektionsdaten werden nun im Außenbereich 22 die Pseudo-Projektionsdaten $P_a$ entlang mehrerer Punkte, beispielsweise an dem Punkt r2, bestimmt. Es werden also die im Innenbereich 16 bekannten Projektionsdaten $P_i$ entlang derselben radialen Linie in den Außenbereich 22 hinein fortgesetzt bis zur Umrisslinie 25. Dieses Verfahren erfolgt für alle radialen Linien, so dass der Außenbereich 22 vollständig, also rings um den Innenbereich 16, mit Pseudo-Projektionsdaten ausgefüllt wird. Darin liegt auch ein wesentlicher Unterschied zu dem aus der US 5,640,436 bekannten Verfahren, bei dem die Fortsetzung parallel zur u-Achse erfolgt, so dass der Außenbereich 22 nicht vollständig, sondern nur in einzelnen Teilbereichen, nämlich links und rechts neben dem Innenbereich 16, mit Pseudo-Projektionsdaten ausgefüllt wird Bei dem erfindungsgemäßen Verfahren werden somit deutlich mehr Pseudo-Projektionsdaten erfasst, was letztendlich zu einer verbesserten Bildqualität führt.

Nachdem die gemessenen Projektionsdaten entlang aller radialer Linien R in den Außenbereich 22 hinein fortgesetzt wurden, werden in einem fünften Verfahrensschritt S5 (siehe Figur 3) die Pseudo-Projektionsdaten, die nun ja in Polarkoordinaten, beispielsweise an den Stellen r2, r3, vorliegen, in kartesische Koordinate umgewandelt. Dazu kann beispielsweise eine lineare Interpolation in Winkelrichtung zwischen benachbarten Linien $R_k$, $R_{k-1}$ erfolgen. Beispielsweise ist das anhand des Koordinatenpunktes m5 gezeigt, dessen zugehöriger Pseudo-Projektionsdatenwert aus den in Polarkoordinaten an den Punkten r2 und r3 errechneten Pseudo-Projektionsdatenwerten ermittelt wird.

Damit liegen letztendlich sowohl die gemessenen Projektionsdatenwerte $P_i$ als auch die Pseudo-Projektionsdatenwerte $P_a$ in den selben kartesischen Koordinaten vor, was eine Rekonstruktion gewünschter dreidimensionaler Bilder im letzten Verfahrensschritt S6 (siehe Figur 3) mit bekannten Rekonstruktionsverfahren, beispielsweise dem bereits erwähnten Rekonstruktionsverfahren nach Defrise und Clack, ermöglicht.

Die in den Figuren 4 und 5b gezeigte Fortsetzung der Projektionsdaten in den Außenbereich 22 kann erfindungsgemäß auf unterschiedliche Weise erfolgen. Bevorzugt soll die Fortsetzung entlang der radialen Linie so erfolgen, dass der in Figur 4 gezeigte Projektionsdatenverlauf P beim Übergang vom Randbereich 23 in den Außenbereich 22 glatt fortgesetzt wird und innerhalb des Außenbereichs, also vor Erreichen der Umrisslinie 25 auf 0 abfällt. Eine einfache Möglichkeit besteht darin, den Verlauf mittels einer elliptischen Kurve im Außenbereich 22 fortzusetzen.

Eine weitere Möglichkeit besteht darin, für die Berechnung der Pseudo-Projektionsdaten r im Außenbereich den folgenden Ansatz zu verwenden:

$$r(s,\mu_k) = (c1(\mu_k)+ c2(\mu_k)s)\, L(s,\mu_k) \qquad \text{für } s1 < s < s2,$$

wobei:

  r den gesuchten Pseudo-Projektionsdatenwert darstellt,
  $\mu_k$ den Winkel der k-ten radialen Linie R in dem Polarkoordinatensystem und s die Position eines Punktes entlang einer radialen Linie angeben,

  s1 und s2 die Breite des Außenbereiches bestimmen, in dem Pseudo-Projektionsdaten bestimmt werden,
  $L(s,\mu_k)$ die Länge des Untersuchungsobjektes entlang der k-ten radialen Linie, die innerhalb des Umrisses des Außenbereichs liegt, und
  c1 und c2 durch Bestimmung des Minimums einer Summe von Fehlerquadraten zu ermittelnde Parameter sind.

Die Längs L $(s, \mu_k)$ des Untersuchungsobjektes entlang einer radialen Linie innerhalb der Umrisslinie 19 des Außenbereichs 21 ist beispielsweise in Figur 2 erläuternd gezeigt. Um diese Längs in dem vorgsnannten Ansatz angaben zu können für die Bestimmung der Pseudo-Projektionsdaten ist es erforderlich, eine Schätzung der dreidimensionalen Form des Körpers des Untersuchungsobjektes, zumindest des Teiles des Untersuchungsobjektes, der innerhalb des Volumens 19 liegt, vorliegsn zu haben. Die Gestalt des Körpers kann entweder geschätzt werden oder mit gseigneten Mitteln, beispielsweise einer Ultraschallvorrichtung, oder gseigneten optischen oder taktilen Sensoren, ermittelt werden.

Mit Hilfe des oben erläuterten Ansatzes werden für jeden Punkt im Außenbereich, an dem ein Pseudo-Projektionsdatenwert bestimmt werden soll, für jede radiale Linie die Parameter c1 und c2 ermittelt. Z.B. können die Parameter c1 und c2 so gewählt werden, dass die mittlere quadratische Abweichung der Funktion r $(s, \mu_k)$ zu den Projektionsdaten $P_r$ entlang der k-ten radialen Linie im Randbereich 23 minimiert wird (leart squares fit). Die so ermittelten Werte von c1 und c2 werden dann in obigen Ansatz eingesetzt, wodurch sich der ideale Pseudo-Projektionsdatenwert für die durch die Parameter s und $\mu_k$ festgelegte Position im Außenbereich 22 ergibt.

Selbstverständlich können die Parameter c1 und c2 in dem obigen Ansatz auch durch eine andere mathematische Methode ermittelt werden. Außerdem kann statt des obigen Ansatzes, in dem ein Polynom ersten Grades verwendet wird, in dem also der Ort s mit der Potenz eins vorkommt, auch Polynome höheren oder niedrigeren Grades verwendet werden, um die Pseudo-Projektionsdatenwerte zu ermitteln. Weiter ist es auch möglich, den Randbereich, aus dem Projektionsdaten ausgewertet werden, zu verbreitern oder zu verschmälern, beispielsweise können auch alle Projektionsdaten entlang einer Linie verwendet werden, um die Pseudo-Projektionsdaten entlang derselben Linie zu bestimmen. Weiter ist auch denkbar, nicht nur Projektionsdaten entlang derselben Linie zu verwenden zur Bestimmung der Pseudo-Projektionsdaten, sondern beispielsweise auch Projektionsdaten aus benachbarten Linien.

Für die Ermittlung der Projektionsdaten kann nicht nur, wie in Figur 1 gezeigt, eine C-Bogen-Röntgeneinrichtung, sondern auch ein konventioneller Computertomograph mit einem flächigen Detektor verwendet werden. Bei der erfindungsgemäßen Röntgeneinrichtung ist der Detektor bevorzugt als digitaler zweidimensionaler Detektor ausgestaltet, es kann jedoch auch ein herkömmlicher Bildverstärker verwendet werden. Dabei ist jedoch zu berücksichtigen, dass die erfassten Projektionsdaten dann entlang eines gekrümmten kartesischen Koordinatensystems vorliegen.

Mit dem erfindungsgemäßen Verfahren kann gegenüber den bekannten Verfahren eine deutliche Verbesserung der Bildqualität erreicht werden. Insbesondere feine anatomische Details können bei derart erzeugten Bildern verbessert dargestellt werden.

**Patentansprüche**

1. Verfahren zur Rekonstruktion dreidimensionaler Bilder aus Kegelstrahl-Projektionsdaten eines in einem Untersuchungsbereich angeordneten Untersuchungsobjektes mit den Schritten:

   a) Erfassung der Kegelstrahl-Projektionsdaten mittels einer eine Röntgenquelle und einen Röntgendetektor aufweisenden Röntgeneinrichtung, wobei die Röntgenquelle zur Erfassung der Projektionsdaten entlang einer Trajektorie um den Untersuchungsbereich geführt wird,
   b) Ermittlung der Kontur der sensitiven Detektorfläche des Röntgendetektors, auf der Projektionsdaten erfasst wurden,
   c) Ermittlung von Pseudo-Projektionsdaten in einem gesamten, die sensitive Detektorfläche ringförmig umschließenden Außenbereich aus den ermittelten Projektionsdaten, und
   d) Rekonstruktion eines dreidimensionalen Bildes des Untersuchungsbereiches aus den auf der sensitiven Detektorfläche erfassten Projektionsdaten und den im Außenbereich ermittelten Pseudo-Projektionsdaten.

2. Verfahren nach Anspruch 1,
   **dadurch gekennzeichnet,**
   **dass** der Außenbereich derart gewählt wird, dass zumindest ein wesentlicher Teil einer jeden von einem beliebigen Punkt der Trajektorie ausgehenden Kegelstrahlprojektion des Untersuchungsobjektes von ihm umfasst wird.

3. Verfahren nach Anspruch 1,
   **dadurch gekennzeichnet,**
   **dass** die Pseudo-Projektionsdaten unter Verwendung der im Randbereich der sensitiven Detektorfläche erfassten Rand-Projektionsdaten ermittelt werden.

4. Verfahren nach Anspruch 1,
   **dadurch gekennzeichnet,**
   **dass** die Pseudo-Projektionsdaten unter Verwendung von a priori Information über die Gestalt des Untersuchungsobjektes ermittelt werden.

5. Verfahren nach Anspruch 1,
   **dadurch gekennzeichnet,**
   **dass** die Pseudo-Projektionsdaten dadurch gewonnen werden, dass die auf der sensitiven Detektorfläche erfassten Projektionsdaten im wesentlichen entlang von geraden radialen Linien fortgesetzt werden, deren jeweiliger Ausgangspunkt im oder nahe beim Mittelpunkt der sensitiven Detektorfläche liegt.

6. Verfahren nach Anspruch 5,
   **dadurch gekennzeichnet,**
   **dass** die Projektionsdaten an Positionen eines kartesischen oder eines verzerrten kartesischen Koordinatensystems von dem Röntgendetektor erfasst werden und dass die im Randbereich liegenden Projektionsdaten zur Bestimmung der Pseudo-Projektionsdaten in Projektionsdaten an Positionen eines Polarkoordinatensystems umgewandelt werden, dessen Ursprung im oder nahe beim Mittelpunkt der sensitiven Detektorfläche liegt.

7. Verfahren nach Anspruch 6,
   **dadurch gekennzeichnet,**
   **dass** die Pseudo-Projektionsdaten an Linienpositionen einer geraden Linie im Außenbereich aus den an Linienpositionen derselben radialen Linie im Randbereich der sensitiven Detektorfläche ermittelten Projektionsdaten bestimmt werden.

8. Verfahren nach Anspruch 5,
   **dadurch gekennzeichnet,**
   **dass** die Pseudo-Projektionsdaten vor der Rekonstruktion der Bilder in Pseudo-Projektionsdaten an Positionen eines kartesischen Koordinatensystems umgewandelt werden.

9. Verfahren nach Anspruch 5,
   **dadurch gekennzeichnet,**
   **dass** die Fortsetzung der Projektionsdaten zu Pseudo-Projektions-daten derart erfolgt, dass die Pseudo-Projektionsdaten den radialen Werteverlauf der Projektionsdaten im wesentlichen glatt fortsetzten und innerhalb des Außenbereichs auf Null abfallen.

**10.** Verfahren nach Anspruch 6,
**dadurch gekennzeichnet,**
**dass** die Ermittlung der Pseudo-Projektionsdaten entlang einer radialen Linie gemäss folgender Formel erfolgt:

$$r(s,\mu_k) = (c1(\mu_k + c2(\mu_k)\, s)\, L(s,\mu_k) \qquad \text{für } s1 < s < s2,$$

wobei:

r den gesuchten Pseudo-Projektionsdatenwert darstellt,
$\mu_k$ den Winkel der k-ten radialen Linie in dem Polarkoordinatensystem und s die Position eines Punktes entlang einer radialen Linie angeben,
s1 und s2 die Breite des Außenbereiches bestimmen, in dem Pseudo-Projektionsdaten bestimmt werden,
$L(s,\mu_k)$ die Länge des Untersuchungsobjektes entlang der k-ten radialen Linie, die innerhalb des Umrisses des Außenbereichs liegt, und
c1 und c2 so gewählt sind, dass die mittlere quadratische Abweichung der Funktion r $(s, \mu_k)$ zu den Projektionsdaten $(P_r)$ entlang der k-ten radialen Linie im Randbereich (23) minimiert wird.

**11.** Röntgeneinrichtung zur Rekonstruktion dreidimensionaler Bilder aus Kegelstrahl-Projektionsdaten eines in einem Untersuchungsbereich angeordneten Untersuchungsobjektes mit:

a) Röntgenquelle und einem Röntgendetektor zur Erfassung von Kegelstrahl-Projektionsdaten, wobei die Röntgenquelle zur Erfassung der Projektionsdaten entlang einer Trajektorie um den Untersuchungsbereich geführt wird,
b) Mitteln zur Ermittlung der Kontur der sensitiven Detektorfläche des Röntgendetektors, auf der Projektionsdaten erfasst wurden,
c) Mitteln zur Ermittlung von Pseudo-Projektionsdaten in einem gesamten, die sensitive Detektorfläche ringförmig umschließenden Außenbereich aus den ermittelten Projektionsdaten, und
d) einer Rekonstruktionseinheit zur Rekonstruktion eines oder mehrerer dreidimensionaler Bilder des Untersuchungsbereiches aus den auf der sensitiven Detektorfläche erfassten Projektionsdaten und den im Außenbereich ermittelten Pseudo-Projektionsdaten.

**12.** Röntgeneinrichtung nach Anspruch 11 mit Mitteln zur Bestimmung der Gestalt des Untersuchungsobjektes.

FIG.1

FIG.2

FIG.3

FIG.4

FIG.5a

FIG.5b